(19) Europäisches Patentamt
European Patent Office
Office européen des brevets

(11) **EP 3 038 005 A1**

(12) **EUROPEAN PATENT APPLICATION**

(43) Date of publication:
**29.06.2016 Bulletin 2016/26**

(51) Int Cl.:
**G06F 21/55** (2013.01)    **H04L 29/06** (2006.01)
**H04L 29/08** (2006.01)

(21) Application number: **15201574.9**

(22) Date of filing: **21.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.12.2014 JP 2014260785**

(71) Applicant: **FUJITSU LIMITED**
**Kawasaki-shi,**
**Kanagawa 211-8588 (JP)**

(72) Inventors:
• **Ushida, Mebae**
  **Kanagawa 211-8588 (JP)**
• **Katayama, Yoshinori**
  **Kanagawa 211-8588 (JP)**
• **Terada, Takeaki**
  **Kanagawa 211-8588 (JP)**
• **Tsuda, Hiroshi**
  **Kanagawa 211-8588 (JP)**

(74) Representative: **Hoffmann Eitle**
**Patent- und Rechtsanwälte PartmbB**
**Arabellastraße 30**
**81925 München (DE)**

(54) **ALERT TRANSMISSION PROGRAM, ALERT TRANSMISSION METHOD, AND ALERT TRANSMISSION APPARATUS**

(57)    An alert transmission method is disclosed. Behavior logs of multiple users are collected from multiple terminals. A computer groups users having a high similarity to each other based on the behavior logs. An alert is transmitted to other users belonging to a group of a user indicated by a report of a cyber attack, when receiving the report from a terminal of the user.

FIG.2

**Description**

FIELD

The embodiment discussed herein is related to an alert transmission program, an alert transmission method, and an alert transmission apparatus.

BACKGROUND

Recently, the number of special cyber attacks aiming at persons who are engaged in specific enterprises or kinds of jobs, so-called targeted attacks have increased. Strengthened tolerance has been implemented against computer viruses in a network system.

A technology is known in which when a computer virus is detected in a frame being relayed, a virus detection alert message is sent to a sender and its receiver of the frame including the computer virus to report a virus detection.

[Patent Documents]

Japanese Laid-open Patent Publication No. 9-269930
Japanese Patent No. 5385253

SUMMARY

According to one aspect of the embodiment, there is provided an alert transmission method including collecting behavior logs of multiple users from multiple terminals; grouping, by a computer, users having a high similarity to each other based on the behavior logs; and transmitting an alert to other users belonging to a group of a user indicated by a report of a cyber attack, when receiving the report from a terminal of the user.

According to other aspects of the embodiment, a computer-readable recording program and an alert transmission apparatus may be provided.

BRIEF DESCRIPTION OF THE DRAWINGS

FIG. 1 is a diagram illustrating an operation example at a normal time;
FIG. 2 is a diagram illustrating an operation example when receiving a cyber attack;
FIG. 3 is a diagram illustrating a hardware configuration of an alert transmission apparatus;
FIG. 4 is a diagram illustrating the hardware configuration of a terminal;
FIG. 5 is a diagram illustrating a functional configuration example of the alert transmission apparatus;
FIG. 6 is a diagram illustrating a functional configuration example of the terminal;
FIG. 7 is a diagram for explaining a normal operation example;
FIG. 8 is a diagram for explaining an operation example in a case of receiving the cyber attack;
FIG. 9 is a diagram illustrating a data example of the behavior log DB in a first embodiment;
FIG. 10 is a flowchart for explaining a first example of a behavior log analysis process in the first embodiment;
FIG. 11 is a flowchart for explaining a second example of the behavior log analysis process in the first embodiment;
FIG. 12 is a diagram illustrating a data example of a similarity determination result table in the first embodiment;
FIG. 13 is a diagram illustrating a data example of a behavior log DB in a second embodiment;
FIG. 14 is a flowchart for explaining a first example of the behavior log analysis process in the second embodiment;
FIG. 15 is a flowchart for explaining a second example of the behavior log analysis process in the second embodiment;
FIG. 16 is a diagram illustrating another example of the behavior log in the first embodiment or the second embodiment;
FIG. 17 is a diagram illustrating a data example of a behavior log DB in a third embodiment;
FIG. 18 is a flowchart for explaining a behavior log analysis process in the third embodiment;
FIG. 19 is a diagram illustrating a result example of a hierarchical clustering in the third embodiment;
FIG. 20 is a diagram illustrating a data example of the similarity determination result table in the third embodiment;
FIG. 21 is a diagram illustrating an example of a normal operation in a fourth embodiment; and
FIG. 22 is a diagram illustrating an operation example in a case of receiving the cyber attack in the fourth embodiment.

DESCRIPTION OF EMBODIMENTS

In a targeted attack on a network system (hereinafter, may be called "cyber targeted attack"), it may be predicted that a person who is damaged by a cyber attack may have features related to his/her business operation and his/her Internet use habits. An attacker may target employees (sales persons, persons handling official gazettes, and the like) who are engaged in special business operations, or may have strategies such as a watering hole attack on a specific Web site.

In this case, features of users being targeted by the targeted attack may be defined. Also, the targeted attack is likely conducted on an unspecified number of users. Only specific users being vulnerable or the like may be damaged. As described above, the users who are damaged by the targeted attack are likely to have such traits.

However, in the above described technology and the like, there is no scheme which prevents other users, who have the features similar to the user being a sender of the frame including a detected virus, from being damaged. It is difficult to totally prevent the targeted attack. It is difficult not only to prevent the cyber attack but also to conduct a response after the cyber attack is received so as to suppress an occurrence of similar damage.

Accordingly, the following embodiments will be provided to determine the appropriate users to be informed of the cyber attack, and to transmit a warning to the users.

In the following, embodiments of the present invention will be described with reference to the accompanying drawings. First, consideration will be made for countermeasures which a user who received a cyber attack usually conducts. When damage occurs due to the cyber attack, the following countermeasures are usually conducted.

(Countermeasure 1)

Prevent a further occurrence of a damage by transmitting a damage report to other users to warn when a user is damaged by the cyber attack.

(Countermeasure 2)

Report the damage from the user damaged by the cyber attack to a supervisor in an enterprise.

The above described countermeasures may have the following problems:

(Problem of Countermeasure 1)

It is not preferable to promptly distribute all damage reports to the users, if expenses of distributing information, of confirming the damage reports one by one by each of all users, and the like are considered. Moreover, wrong information may be spread due to misunderstandings of the users.

However, if related users are selected and warned after damage details are checked by an administrator of an information system, it is difficult to promptly respond to the cyber attack, and to prevent a further occurrence of the damage.

(Problem of Countermeasure 2)

Even if the supervisor receives the damage report, it may be difficult to promptly share information and warn each other among truly vital users.

Accordingly, the embodiment provides a scheme for immediately transmitting an alert to other appropriate users alone when a certain user is damaged by the cyber attack.

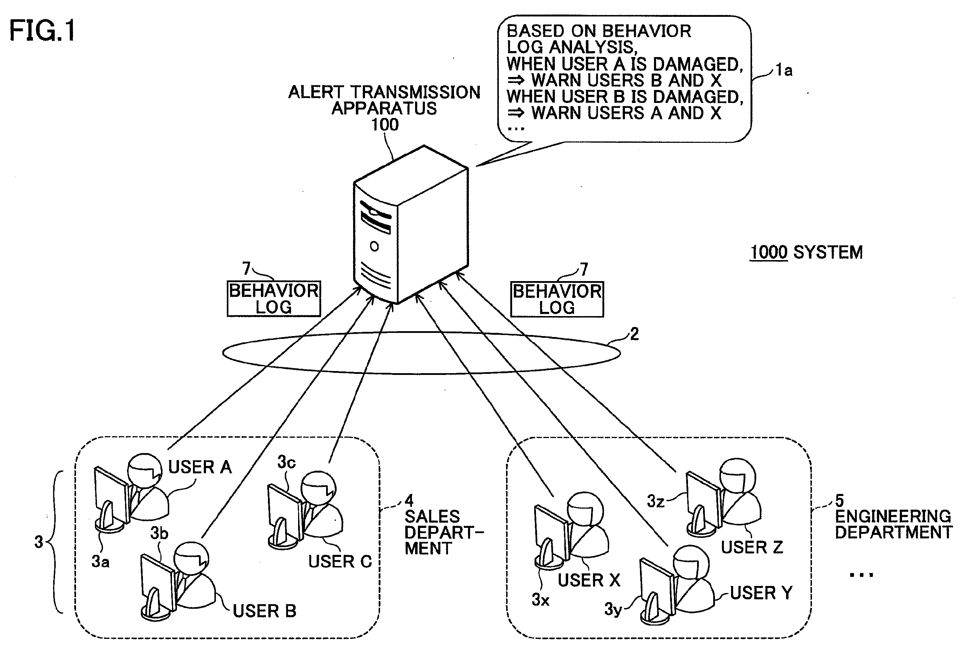

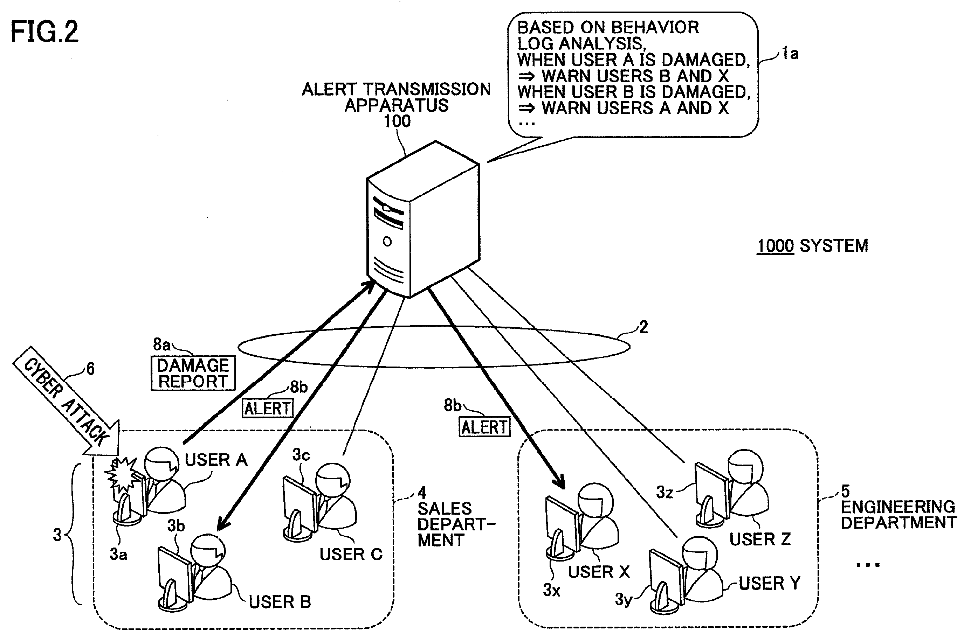

A system in the embodiment will be described with reference to FIG. 1 and FIG. 2. FIG. 1 is a diagram illustrating an operation example at a normal time. A system 1000 depicted in FIG. 1 includes an alert transmission apparatus 100, and multiple terminals 3. The multiple terminals 3 are connected to the alert transmission apparatus 100 via a network 2.

In FIG. 1, the system 1000 is constructed in the enterprise, and the multiple terminals 3 connected to the alert transmission apparatus 100 are used by users belonging to one or more respective departments.

The departments may be a sales department 4, an engineering department 5, and the like. A user A, a user B, a user C, and the like may belong to the sales department 4. Also, a user X, a user Y, a user Z, and the like may belong to the engineering department 5. The multiple terminals 3 include a terminal 3a of the user A, a terminal 3b of the user B, a terminal 3c of the user C, a terminal 3x of the user X, a terminal 3y of the user Y, and a terminal 3z of the user Z.

The alert transmission apparatus 100 collects behavior logs 7 from the multiple terminals 3 during a normal operation, and analyzes behavior characteristics of users to provide protection against the targeted cyber attack based on accumulated behavior logs 7. Each of the multiple terminals 3 sends a log pertinent to an operation as the behavior log 7 to the alert transmission apparatus 100.

The behavior log 7 may indicate the behavior characteristics which represent operations of the user with respect to a destination of a sent electronic mail (e-mail) of the user, a Web browsing destination accessed by the user, a received electronic mail, and the like. In the embodiment, information indicating the operations related to usage of the Internet is collected as the behavior logs 7 by the alert transmission apparatus 100.

The alert transmission apparatus 100 analyzes the behavior logs 7 being collected, and manages a correspondence between each of the users and each of other users who are to be reported to when a user is damaged by the cyber attack. As an analysis result, the alert transmission apparatus 100 may create the following list 1a used to respond to the cyber attack:

- Report to the user B and the user X when the user A is damaged (first countermeasure),
- Report to the user A and the user Z when the user B is damaged (second countermeasure).

In this example, in the first countermeasure, in a case in which the user A belonging to the sales department 4 is damaged, the user B belonging to the same sales department 4 and the user X belonging to the engineer department 5 different from the user A are indicated as subject users to be warned.

In the second countermeasure, in a case in which the user B belonging to the sales department 4 is damaged, the user A belonging to the same sales department 4 and the user Z belonging to the engineer department 5 different from the user B are indicated as the subject users to be warned.

In the embodiment, all other users are not always the subject users to be warned with respect to the user damaged by the cyber attack. In a case in which the damaged user is related to business being coordinated with one or more other departments, rather than disseminating prevention against the cyber attack within the same department, by promptly reporting to the users in other departments strongly related to the business of the damaged user, it is possible to immediately disseminate warning to essential proper users when a certain user is damaged by the cyber attack. Accordingly, it is possible to minimize damage of the cyber attack.

FIG. 2 is a diagram illustrating an operation example when receiving the cyber attack. In FIG. 2, when the terminal 3a used by the user A receives the cyber attack, the terminal 3a of the user A sends a damage report to the alert transmission apparatus 100 in response to a virus detection by a virus check function of the terminal 3a.

The alert transmission apparatus 100 specifies one or more alert subjects whom an alert 8b is transmitted, depending on a sender of the damage report 8a from the multiple countermeasures as described above, and issues the alert 8b representing a likelihood of receiving the cyber attack, to the one or more alert subjects. The alert subjects are regarded as other users specific to the damaged user and to be warned.

In FIG. 2, an operation example of the alert transmission apparatus 100 is depicted in a case in which the user A receives a cyber attack 6. When receiving the damage report 8a, the alert transmission apparatus 100 specifies the user A as the sender of the damage report 8a.

The alert transmission apparatus 100 transmits the alert 8b to the alert subjects indicating a countermeasure depending on the specified sender. The alert 8b may be sent to other users being the alert subjects by an electronic mail (hereinafter, simply called "e-mail") from the alert transmission apparatus 100. Alternatively, the alert 8b may be sent to the terminals 3 of the other users being the alert subjects, and the terminals 3 may display the alert 8b in response to the notice.

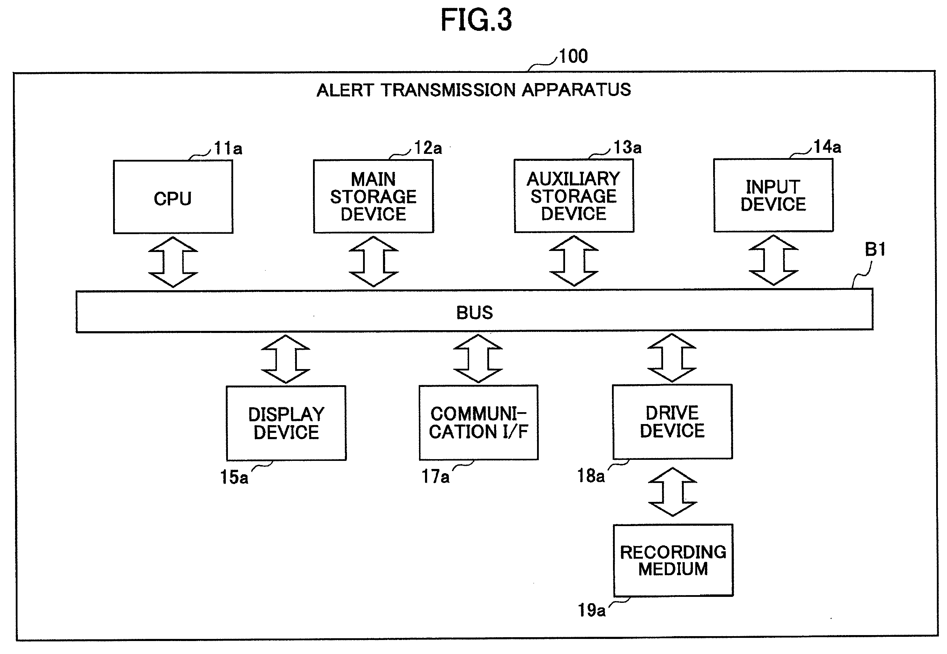

As described above, the alert transmission apparatus 100 includes a hardware configuration as illustrated in FIG. 3. FIG. 3 is a diagram illustrating the hardware configuration of the alert transmission apparatus. In FIG. 3, the alert transmission apparatus 100 is regarded as a server apparatus controlled by a computer, and includes a Central Processing Unit (CPU) 11a, a main memory device 12a, an auxiliary storage device 13a, an input device 14a, a display device 15a, a communication InterFace (I/F) 17a, and a drive device 18a, which are mutually connected via a bus B1.

The CPU 11a controls the alert transmission apparatus 100 in accordance with a program stored in the main storage device 12a. A Random Access Memory (RAM), a Read Only Memory (ROM), and the like are used as the main storage device 12a to store or temporarily retain the program executed by the CPU 11a, data used in a process conducted by the CPU 11a, data acquired in the process conducted by the CPU 11a, and the like.

A Hard Disk Drive (HDD) or the like may be used as the auxiliary storage device 13a to store data such as various programs for conducting processes and the like. A part of the programs stored in the auxiliary storage device 13a is loaded into the main storage device 12, and executed by the CPU 11a to realize various processes.

The input device 14a includes a mouse, a keyboard, and the like used for an administrator to input various information sets used in the processes conducted in the alert transmission apparatus 100. The display apparatus 15a displays various information sets under control of the CPU 11a. The communication I/F 17a controls wired communications and/or wireless communications through the network 2. Communications of the communication I/F 17a are not limited to the wired communications or the wireless communications.

The program realizing the process conducted by the alert transmission apparatus 100 in the embodiment may be provided by a recording medium 19a such as a Compact Disc Read-Only Memory (CD-ROM) or the like to the alert transmission apparatus 100.

The drive device 18a interfaces between the recording medium 19a (which may be the CD-ROM or the like) set into the drive device 18a of the alert transmission apparatus 100.

Also, the recording medium 19a stores the program for realizing various processes according to the embodiment, which will be described. The program stored in the recording medium 19a is installed into the alert transmission apparatus 100 through the drive device 18a. The installed program becomes executable by the alert transmission apparatus 100.

It is noted that the recording medium 19a for storing the program is not limited to the CD-ROM, and any type of a non-transitory (or tangible) computer-readable recording medium may be used. As the non-transitory (or tangible) computer-readable recording medium, a Digital Versatile Disk (DVD), a portable recording medium such as a Universal Serial Bus (USB) memory, or a semiconductor memory such as a flash memory may be used.

Also, the program may be downloaded and installed via the communication I/F 17a from an external providing server. The installed program is stored in the auxiliary storage device 13a.

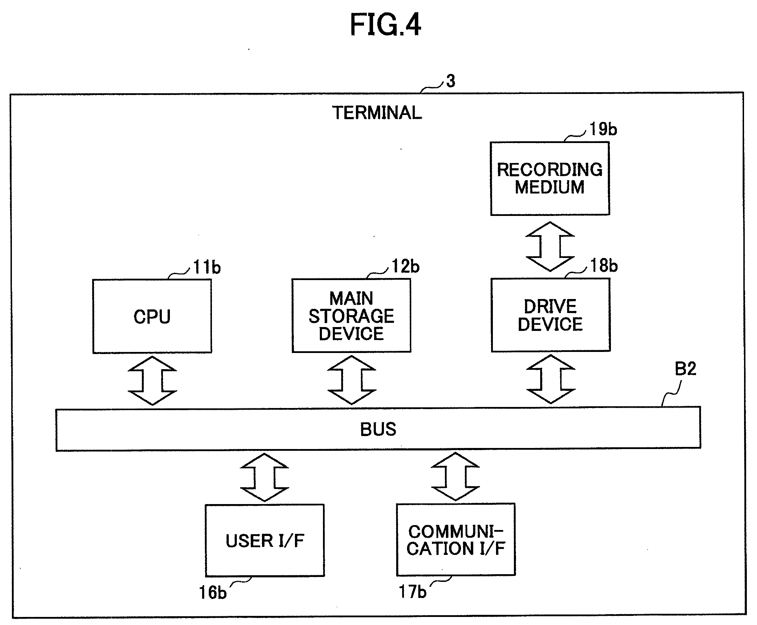

Each of the terminals 3 includes a hardware configuration as illustrated in FIG. 4. FIG. 4 is a diagram illustrating the hardware configuration of the terminal. In FIG. 4, the terminal 3 may be an information processing terminal such as a note book computer, a laptop computer, a tablet type computer, or the like which is controlled by the computer, and includes a Central Processing Unit (CPU) 11b, a main storage device 12b, a user InterFace (I/F) 16b, a communication I/F 17b, and a drive device 18b (which are mutually connected via a bus B2.

The CPU 11b controls the terminal 3 in accordance with a program stored in the main storage device 12b. A Random Access Memory (RAM), a Read Only Memory (ROM), and the like are used as the main storage device 12b to store or temporarily retain the program executed by the CPU 11b, data used in a process conducted by the CPU 11b, data acquired in the process conducted by the CPU 11b, and the like. The program stored in the main storage device 12b is executed by the CPU 11b, and various processes are realized.

The user I/F 16b corresponds to a touch panel or the like which displays various information sets under control of the CPU 11b, and allows an input operation by the user. Communications by the communication I/F 17b are not limited to wireless or wired communications. The drive device 18b interfaces between a recording medium 19b set into the drive device 18b and the terminal 3. The recording medium 19b may be a Secure Digital (SD) memory card or the like.

The program for realizing processes conducted by the terminal 3 may be downloaded from an external apparatus through the network 2 or the like. Alternatively, the program may be stored in advance in the main storage device 12b of the terminal 3. Otherwise, the program may be installed from the recording medium 19b such as the SD memory card or the like.

The terminal 3 may be an information processing terminal such as the desk top computer. In this case, its hardware configuration is similar to the hardware configuration depicted in FIG. 3, and the explanations thereof will be omitted.

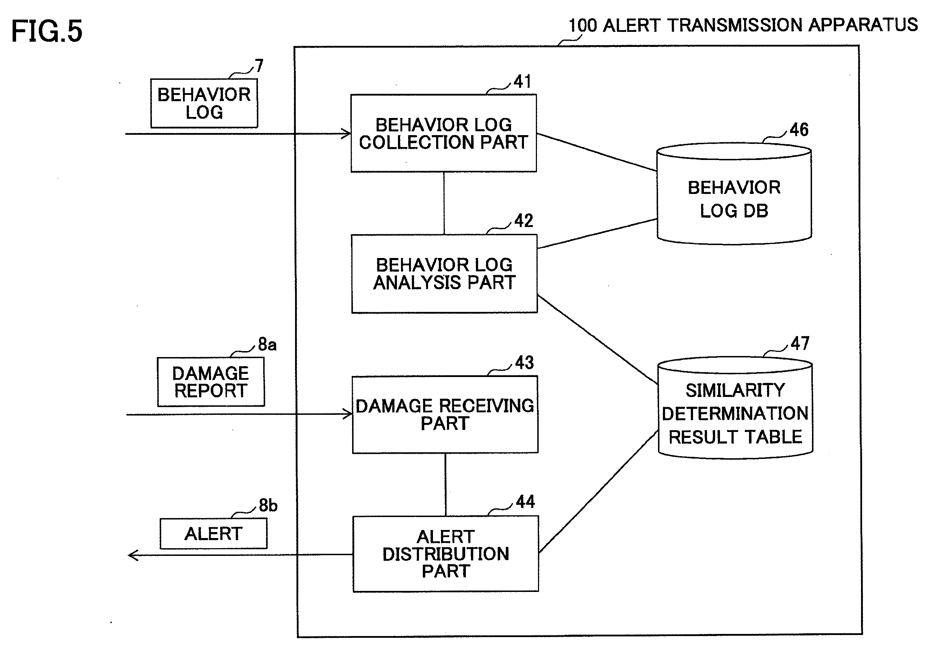

FIG. 5 is a diagram illustrating a functional configuration example of the alert transmission apparatus. In FIG. 5, the alert transmission apparatus 100 includes a behavior log collection part 41, a behavior log analysis part 42, a damage receiving part 43, and an alert distribution part 44. The auxiliary storage device 13a stores a behavior log DB 46, a similarity determination result table 47, and the like.

The behavior log collection part 41 receives the behavior logs 7 from the multiple terminals 3, and cumulatively stores the behavior logs 7 in the behavior log DB 46. The behavior log analysis part 42 determines a similarity of a feature among the users by using the behavior log DB 46, creates the similarity determination result table 47, and stores the similarity determination result table 47 in the auxiliary storage device 13a. The similarity determination result table 47 may be updated at predetermined intervals.

When receiving the damage report 8a from the terminal 3, the damage receiving part 43 sends the damage report 8a to the alert distribution part 44. The alert distribution part 44 refers to the similarity determination result table 47, acquires information of the alert subject when the user is indicated by the damage report 8a, and sends the alert 8b of the alert subject.

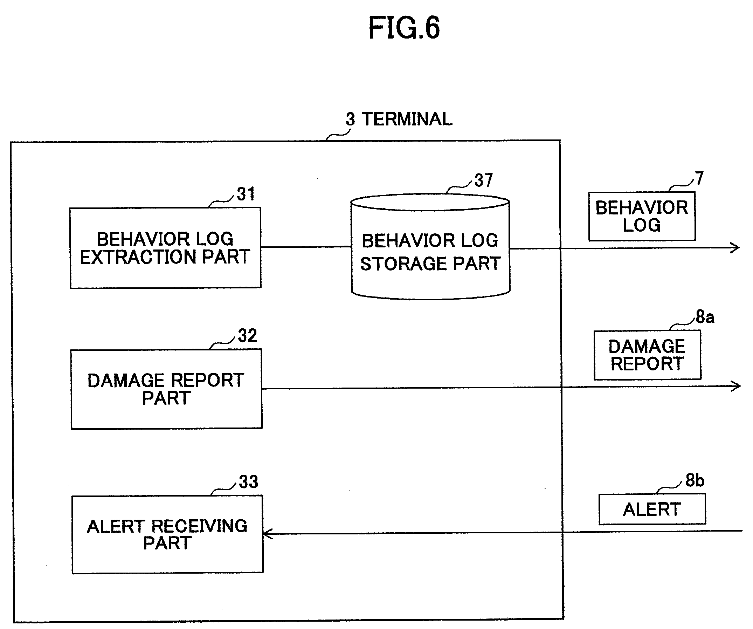

FIG. 6 is a diagram illustrating a functional configuration example of the terminal. In FIG. 6, the terminal 3 includes a behavior log extraction part 31, a damage report part 32, and an alert receiving part 33. A part of the auxiliary storage device 18b is used as a behavior log storage part 37. The behavior log storage part 37 temporarily accumulates the behavior logs 7.

The behavior log extraction part 31 creates respective logs in response to an operation event of the user I/F 16b, an action event of a predetermined application which is caused by the operation event, and the like. The behavior log extraction part 31 extracts the behavior logs 7 as subjects in the embodiment among the created logs, and stores the extracted behavior logs 7 in the behavior log storage part 37.

Each of the behavior logs 7 includes information used to determine the similarity of the features among the users. Details of the behavior log 7 will be described later in a first embodiment, a second embodiment, and a third embodiment.

The damage report part 32 sends the damage report 8a to the alert transmission apparatus 100 when the terminal 3 receives the cyber attack. The damage report 8a may include a user name of the terminal 3 which has received the cyber attack. The user name may indicate a user ID. The alert receiving part 33 displays the alert 8b at the user I/F 16b and reports the cyber attack to the user, when receiving the alert 8b from the alert transmission apparatus 100.

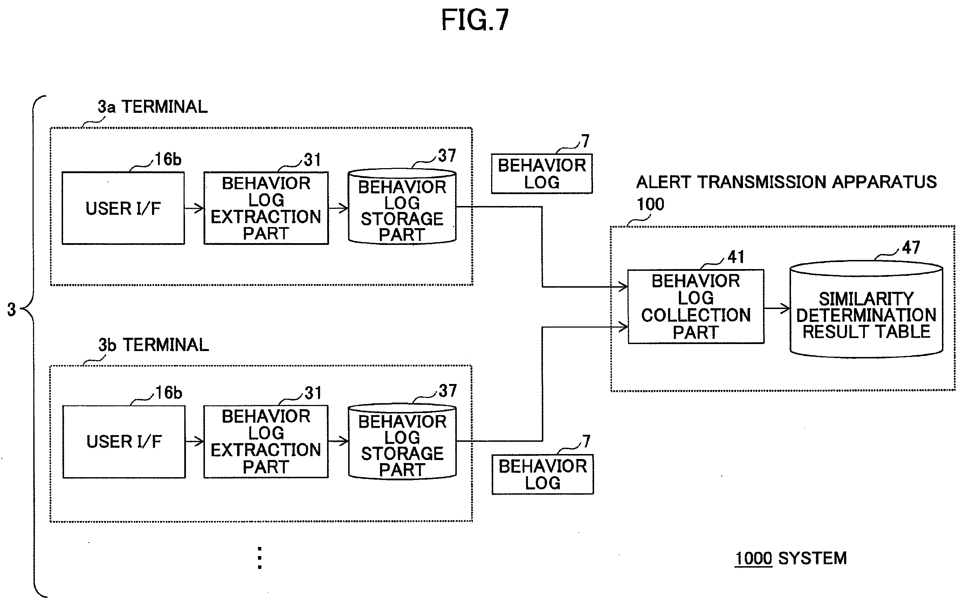

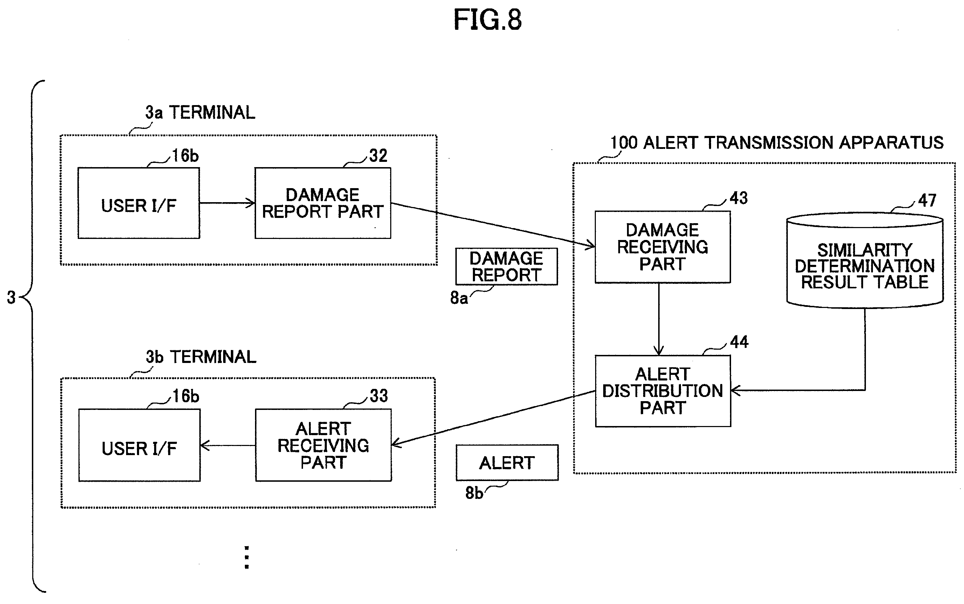

Operation examples in the system 1000 will be described with reference to FIG. 7 and FIG. 8. FIG. 7 is a diagram for explaining a normal operation example. In FIG. 7, during the normal operation, the behavior log 7 is periodically transmitted from each of the terminals 3 including the terminals 3a and 3b.

In the terminal 3a, the behavior log extraction part 31 extracts the behavior log 7 among the logs created in response to the operation event of the user I/F 16b, the action event of the predetermined application which is cause by the operation event, and the like, and stores the extracted behavior log 7 in the behavior log storage part 37.

The behavior log extraction part 31 of the terminal 3a periodically sends the behavior logs 7 stored in the behavior log storage part 37 to the alert transmission apparatus 100.

On the other hand, in the terminal 3b, similarly, the behavior log extraction part 31 extracts the behavior log 7 among the logs created in response to the operation event of the user I/F 16b, the action event of the predetermined application which is cause by the operation event, and the like, and stores the extracted behavior log 7 in the behavior log storage part 37.

The behavior log extraction part 31 of the terminal 3b periodically sends the behavior logs 7 stored in the behavior log storage part 37 to the alert transmission apparatus 100.

In other terminals 3, similarly, the behavior logs 7 are periodically sent to the alert transmission apparatus 100.

The alert transmission apparatus 100 receives the behavior logs 7 from the multiple terminals 3 including the terminals 3a and 3b. The behavior log collection part 41 analyzes the similarity of the features among the users by using the behavior logs 7 of the multiple terminals 3. Hence, the similarity determination result table 47 is created. The behavior log collection part 41 periodically updates the similarity determination result table 47.

FIG. 8 is a diagram for explaining an operation example in a case of receiving the cyber attack. In FIG. 8, when the terminal 3a of the user A receives the cyber attack, the terminal 3a sends the name of the user who is damaged, to the alert transmission apparatus 100.

In the embodiment, a method is not limited to detect the damage. The damage report 8a may be sent to the alert transmission apparatus 100 when it is determined that the user is or is likely to be damaged. Alternatively, the damage report part 32 may automatically send the damage report 8a to the alert transmission apparatus 100, when software or the like having a virus check function, which is active in the terminal 3a, detects malware.

In the alert transmission apparatus 100, when the behavior log analysis part 42 receives the damage report 8a from the terminal 3a, the user name is acquired from the damage report 8a, and sent to the alert distribution part 44. In this case, the name of the user A is acquired from the damage report 8a and is sent to the alert distribution part 44.

The alert distribution part 44 acquires a similarity determination result pertinent to the user name, which is sent from the behavior log analysis part 42, from the similarity determination result table 47, and sends the alert 8b to other users in which features indicated by the acquired similarity determination result are similar to each other.

In this example, it is assumed that at least the user B is indicated by the similarity determination result pertinent to the user A. The alert distribution part 44 sends the alert 8b of which the destination is the user B.

At the terminal 3b, when receiving the alert 8b from the alert distribution part 44 of the alert transmission apparatus 100, the alert receiving part 33 displays the notice of the alert 8b at the user I/F 16b.

As described above, the users do not individually determine who are the alert subjects to send the warning of the cyber attack to. However, it is possible to promptly send the alert 8b to persons related to the user who receives the cyber attack.

Next, various applicable examples in the embodiment will be described.

- First Embodiment

The destination of the e-mail is collected as the behavior log 7, and the similarity between the users of the sender and one or more receivers is determined based on the destinations. It is determined whether two users are similar to each other, by using a Jaccard coefficient. The Jaccard coefficient is one of indexes to calculate the similarity of two n-dimensional vectors taking 0 or 1, and is obtained by the following expression with respect to two vectors A and B:

<Expression 1>

$$JC_{A+B} = \frac{NOE_{A+B}}{NOE_A + NOE_B - NOE_{A+B}}$$

where $JC_{A+B}$ indicates the Jaccard coefficient for the vectors A and B, $NOE_{A+B}$ indicates the number of elements where both vectors A and B take 1, $NOE_A$ indicates the number of elements where only the vector A takes 1, and $NOE_B$ indicates the number of elements where only the vector B takes 1.

With respect to all destinations for each of e-mails, for each of the users, vectors are created in which a vector indicates 1 when the e-mail is transmitted and the vector indicates 0 when the e-mail is not transmitted. The users having a value to which the Jaccard coefficient is applied and which is lower than or equal to a threshold are determined as highly similar users. In order to calculate the Jaccard coefficient, in practice, all conceivable destinations may not be acquired.

- Second Embodiment

Uniform Resource Locators (URLs) of browsed Web sites are collected as the behavior logs 7, and the similarity among the users may be determined.

In this case, with respect to all Web browsing destinations, for each of the users, vectors are created in which a vector indicates 1 when the e-mail is transmitted and the vector indicates 0 when the e-mail is not transmitted. Based on the vector, the Jaccard coefficient is calculated for each of the users. The users having a value to which the Jaccard coefficient is applied and which is lower than or equal to a threshold are determined as highly similar users. In order to calculate the Jaccard coefficient, in practice, all conceivable Web browsing destination may not be acquired.

- Third Embodiment

Behavior characteristics (n-dimensional vectors) are collected as the behavior logs 7, and the similarity among users is determined. Also, the behavior characteristics may be determined at each of the terminals 3. A PC operation log such as a stroke record, and the like may be sent and collected as the behavior log 7 to the alert transmission apparatus 100. Also, the behavior characteristics may be created at the alert transmission apparatus 100.

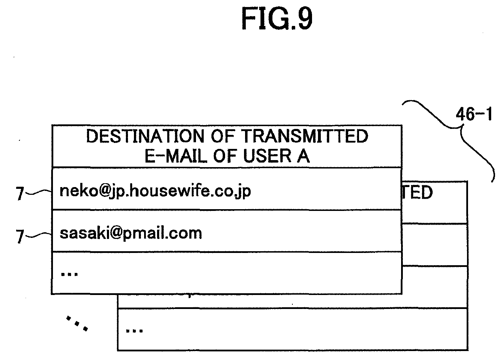

First, the first embodiment will be described. FIG. 9 is a diagram illustrating a data example of the behavior log DB in the first embodiment. In a behavior log DB 46-1 illustrated in FIG. 9, destinations of transmitted e-mails are listed as the behavior logs 7 for each of the users.

In the data example in FIG. 9, in the behavior log DB 46-1, the destinations of the e-mails sent from the user A are listed such as "neko@jp.housewife.co.jp", "sasaki@pmail.com", and the like. For other users, the destinations are listed in the same manner.

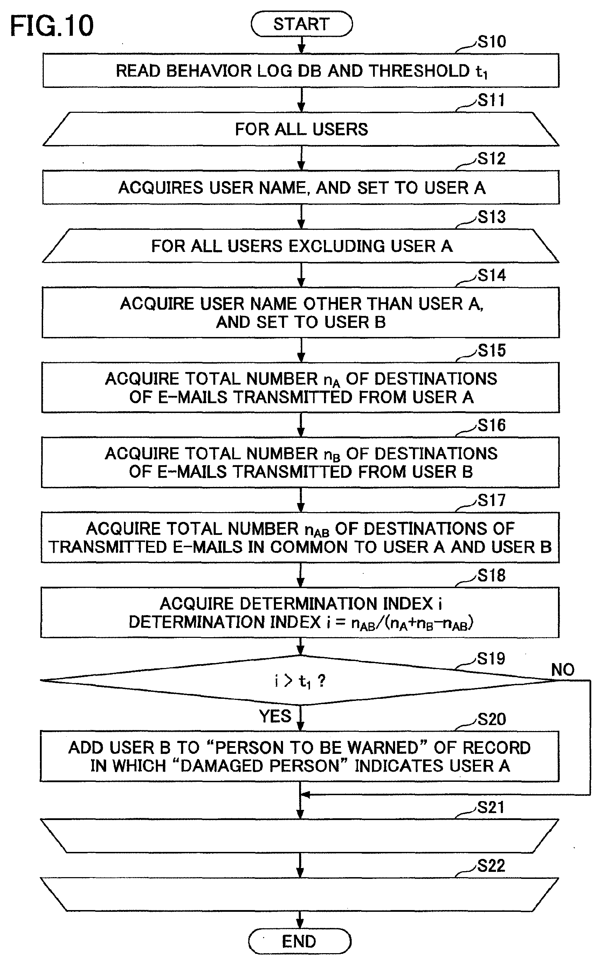

Next, a behavior log analysis process conducted by the behavior log analysis part 42 in the first embodiment will be described. FIG. 10 is a flowchart for explaining a first example of the behavior log analysis process in the first embodiment. In FIG. 10, the behavior log analysis part 42 reads the behavior log DB 46-1 including the behavior logs 7 of all users, and a threshold $t_1$ (step S10).

The threshold $t_1$ indicates a reference value used to determine that the behaviors of two persons are similar. When a value of the similarity is closer to 1, the behaviors of the two persons are similar. When the value of the similarity is closer to 0, the behaviors of two persons are not similar. Also, the threshold $t_1$ may be changed by an administrator.

For information of all users managed by the behavior log DB 46-1, processes from step S12 to step S22 are conducted (step S11). The behavior log analysis part 42 subsequently acquires the user name and sets the acquired user name to a user A (which is a variable name in this flowchart) (step S12).

The behavior log analysis part 42 conducts processes from step S14 to step S21 for all users excluding the user A (step S13). The behavior log analysis part 42 subsequently acquires one user name other than the user A from the behavior log DB 46-1 (step S14).

The behavior log analysis part 42 refers to the behavior log DB 46-1, and acquires a total number $n_A$ of destinations of e-mails sent by the user A (step S15). Similarly, the behavior log analysis part 42 acquires a total number $n_B$ of destinations of e-mails sent by a user B (which is a variable name in this flowchart) (step S16). Moreover, the behavior log analysis part 42 acquires a total number $n_{AB}$ of destinations of the transmitted e-mails which are commonly indicated by both the user A and the user B (step S17).

After that, the behavior log analysis part 42 acquires a determination index I (step S18). The determination index 9 is calculated as the Jaccard coefficient which represents the similarity between the user A and the user B, by the above described expression 1.

The behavior log analysis part 42 determines whether the determination index I is greater than or equal to the threshold $t_1$ (step S19). When the determination index i is lower than or equal to the threshold $t_1$, the behavior log analysis part 42 determines that the user B is not similar to the user A, and goes back to step S13 via step S21 to determine the similarity with a next user and repeats the above described processes in the same manner.

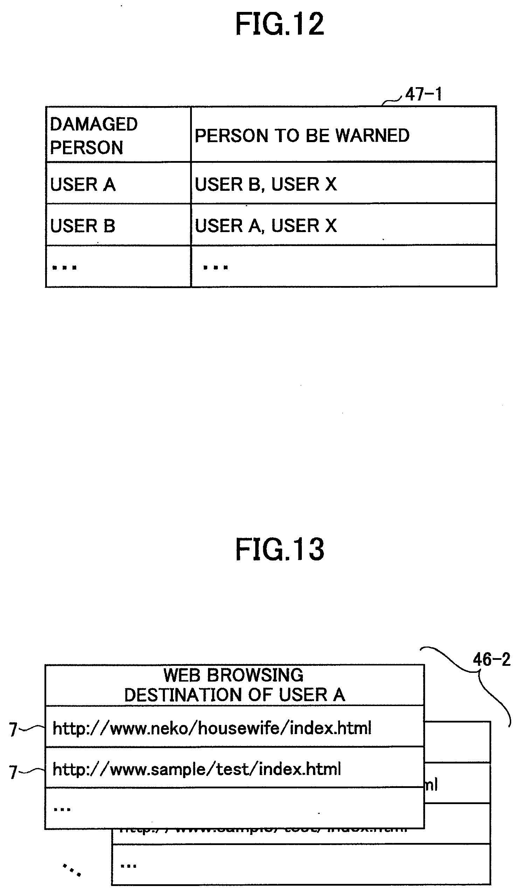

On the other hand, when the determination index i is greater than or equal to the threshold $t_1$, the behavior log analysis part 42 adds a value of the user B to an item "PERSON TO BE WARNED" of a record which indicates the name of the user A in an item "DAMAGED PERSON" in the similarity determination result table 47-1 (FIG. 12) (step S21). Then, the behavior log analysis part 42 goes back to step S13 via step S21 to determine the similarity with a next user and repeats the above described processes in the same manner.

When a similarity determination is conducted with respect to all users other than the user A, the behavior log analysis part 42 goes back to step S11 via step S22 to select a next user name to set as the user A, and the above described processes are conducted in the same manner. When the similarity is determined with respect to all combinations of the users, the behavior log analysis part 42 terminates the behavior log analysis process.

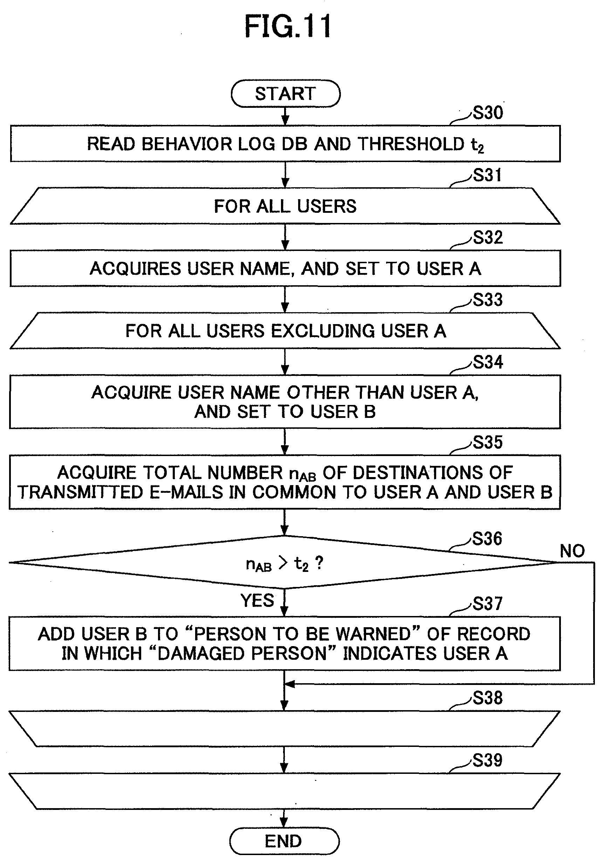

FIG. 11 is a flowchart for explaining a second example of the behavior log analysis process in the first embodiment. In the second example of the behavior log analysis process, by comparing the total number $n_{AB}$ of destinations of the transmitted e-mails which are commonly indicated by both the user A and the user B, the similarity is determined between characteristics of the user A and the user B.

In FIG. 11, the behavior log analysis part 42 reads the behavior log DB 46-1 (FIG. 9) including the behavior logs 7 of all users and the threshold $t_2$ (step S30).

The threshold $t_2$ represents a reference value used to determine that two users are similar to each other. The threshold $t_2$ represents a positive integer number. Also, the threshold $t_2$ may be changed by the administrator or the like.

Processes in steps 22 to S29 are conducted with respect to all users managed by the behavior log DB 46-1 (step S31). The behavior log analysis part 42 subsequently acquires one user name and sets the acquired user name to a user A (which is a variable name in this flowchart) (step S32).

The behavior log analysis part 42 conducts processes from step S14 to step S21 for all users excluding the user A (step S33). The behavior log analysis part 42 subsequently acquires one user name other than the user A from the behavior log DB 46-1 (step S34).

The behavior log analysis part 42 refers to the behavior log DB 46-1, and acquires the total number $n_{AB}$ of destinations of the transmitted e-mails which are commonly indicated by both the user A and the user B (step S35). Then, the behavior log analysis part 42 determines whether the total number $n_{AB}$ of destinations commonly indicated by both the users A and B is greater than the threshold $t_2$ (step S36).

When the total number $n_{AB}$ is less than or equal to the threshold $t_2$, the behavior log analysis part 42 determines that the user B is not similar to the user A. Then, the behavior log analysis part 42 goes back to step S38 via step S33 to determine the similarity with a next user, and the above described processes are repeated in the same manner.

On the other hand, when the total number $n_{AB}$ is greater than the threshold $t_2$, the behavior log analysis part 42 adds the name of the user B to the item "PERSON TO BE WARNED" of a record which indicates the name of the user A in an item "DAMAGED PERSON" in the similarity determination result table 47-1 (FIG. 12) (step S37). Then, the behavior log analysis part 42 goes back to step S33 via step S38 to determine the similarity with a next user and repeats the above described processes in the same manner.

After the similarity determination is conducted with respect to all users other than the user A, the behavior log analysis part 42 goes back to step S31 via step S39 to select a next user name to set as the user A, and the above described processes are repeated in the same manner. After that, when the similarity is determined for all combinations of the users, the behavior log analysis part 42 terminates the behavior log analysis process.

By the first example of the behavior log analysis process (FIG. 10), the similarity determination result table 47-1 is created as illustrated in FIG. 12. Also, in the second example of the behavior log analysis process (FIG. 11), the similarity determination result table 47-1 is similarly created.

FIG. 12 is a diagram illustrating a data example of the similarity determination result table in the first embodiment. In FIG. 12, the similarity determination result table 47-1 is regarded as a table in which persons to be warned are respectively associated with corresponding damaged persons, and which includes items of "DAMAGED PERSON", "PERSON TO BE WARNED", and the like.

The item "DAMAGED PERSON" indicates the name of the user at a side damaged by the cyber attack. The name of the user being a damaged person is acquired from the damage report 8a received from the terminal 3. The item "PERSON TO BE WARNED" indicates one or more names of the users who are determined to correlate with characteristics of the damaged person. When the name (corresponding to the user name) of the damaged person is indicated by the damage report 8a, it is possible to specify the user to whom the alert 8b is transmitted, based on one or more user names indicated by the item "PERSON TO BE WARNED".

In this example, by referring to records in each of which the item "DAMAGED PERSON" indicates the user A, it is possible to see that the persons to be warned are the user B and the user X. That is, when the user A is damaged by the cyber attack, the alert 8b is transmitted to the user B and the user X. For other users, the same analysis is performed.

Next, a second embodiment will be described. FIG. 13 is a diagram illustrating a data example of the behavior log DB in the second embodiment. The behavior log DB 46-2 illustrated in FIG. 13 lists URLs of the Web browsing destinations for each of the users.

In the data example of the behavior log DB 46-2 in FIG. 13, the Web browsing destinations of the user A are listed such as "http://wsvw.neko/housewife/index. html", "http://www.sample/test/index.html", and the like. For other users, the Web browsing destinations are listed in the same manner.

Next, the behavior log analysis process conducted in the behavior log analysis part 42 in the second embodiment will be described. Since the behavior log analysis process in the second embodiment is similar to that in the first embodiment, steps that are the same as those in the first embodiment are indicated by the same reference numerals and the explanation thereof will be omitted.

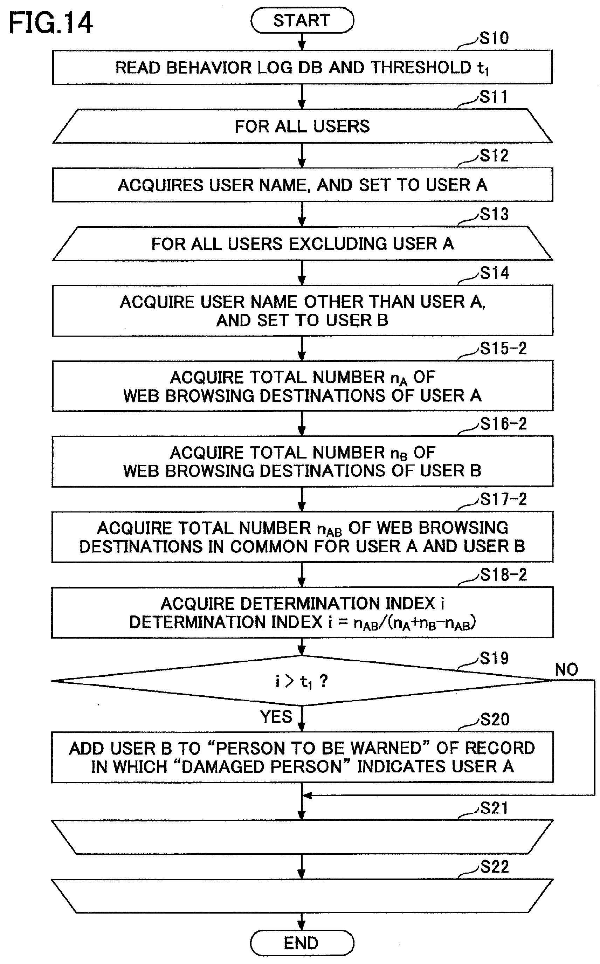

FIG. 14 is a flowchart for explaining a first example of the behavior log analysis process in the second embodiment. In FIG. 14, similar to the flowchart in FIG. 10, the behavior log analysis part 42 conducts processes from step S10 to step S14.

When acquiring the name of the user B with respect to the user A, the behavior log analysis part 42 refers to the behavior log DB 46-1, acquires the total number $n_{AB}$ of the Web browsing destinations of the user A (step S15-2), and similarly acquires the total number $n_B$ of the Web browsing destination of the user B (step S16-2). The behavior log analysis part 42 further acquires the total number $n_{AB}$ of the Web browsing destinations in common for the user A and the user B (step S17-2).

The behavior log analysis part 42 acquires the destination index i (step S18). The destination index i is calculated by the above described expression 1.

The behavior log analysis part 42 determines whether the user B is similar to the user A, by comparing the determination index i with the threshold $t_1$, and creates the similarity determination result table 47-1 (FIG. 12) (steps S19 to S20).

When the similarity is determined for all combinations of the users, the behavior log analysis part 42 terminates the behavior log analysis process.

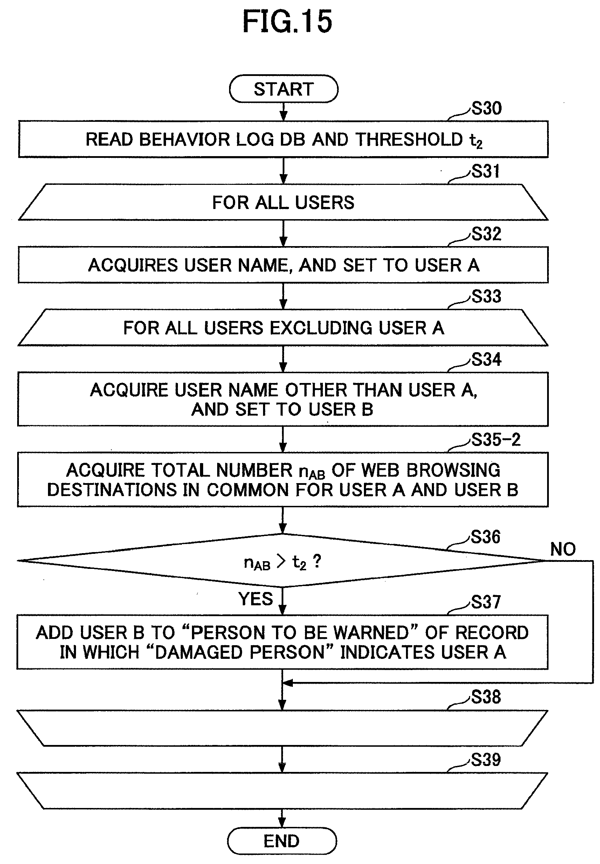

FIG. 15 is a flowchart for explaining a second example of the behavior log analysis process in the second embodiment. In FIG. 15, similar to the flowchart in FIG. 11, the behavior log analysis part 42 conducts the processes from steps S33 to S34.

When receiving the name of the user B with respect to the user A, the behavior log analysis part 42 refers to the behavior log DB 46-1, and acquires the total number $n_{AB}$ of the Web browsing destinations in common for the user A and the user B (step S35-2). The behavior log analysis part 42 determines whether the total number $n_{AB}$ of the Web browsing destinations in common for the user A and the user B is greater than the threshold $t_2$ (step S36).

The behavior log analysis part 42 determines whether the user B is similar to the user B, by comparing the total number $n_{AB}$ of the Web browsing destinations with the threshold $t_2$, and creates the similarity determination result table 47-1 (FIG. 12) (step S37).

When the similarity is determined for all combinations of the users, the behavior log analysis part 42 terminates the behavior log analysis process.

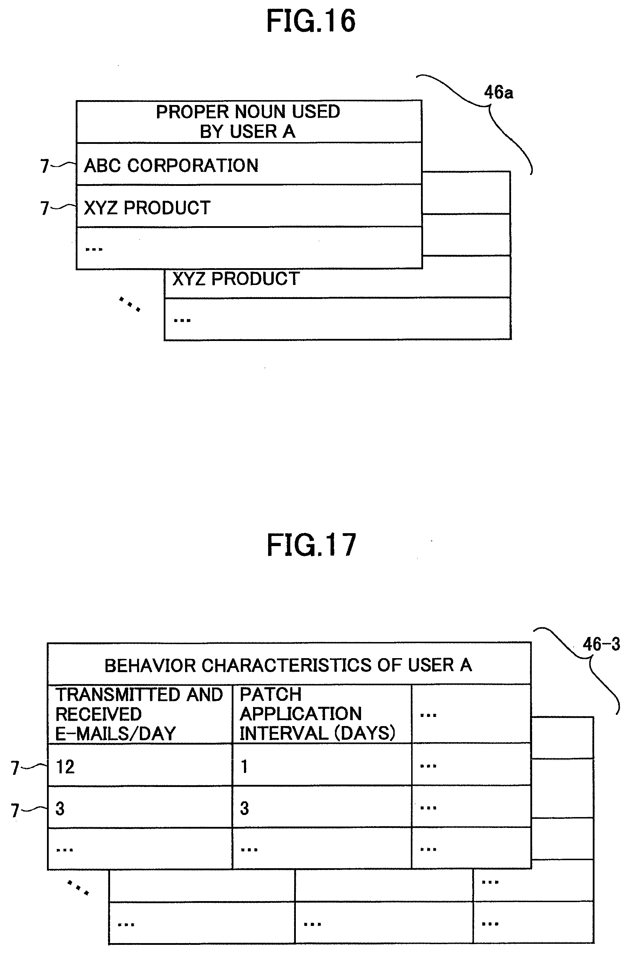

As a modification example of the first embodiment and the second embodiment, the morphological analysis may be conducted to text in the e-mail set by the user to extract a proper noun, and the extracted proper noun may be collected as the behavior log 7. FIG. 16 is a diagram illustrating another example of the behavior log in the first embodiment or the second embodiment.

In the behavior log DB 46a illustrated in FIG. 16, for each user, the destinations of the transmitted e-mails are listed as the behavior logs 7. In the example depicted in FIG. 16, by the behavior log DB 46a, the proper nouns used by the user A in the text are listed as "ABC corporation", "XYZ product", and the like. For each of other users, the proper nouns are listed in the same manner.

Also, when using the behavior log DB 46a as illustrated in FIG. 16, the behavior log analysis process by the behavior log analysis part 42 is similar to that in the first embodiment or the second embodiment. In the flowchart in the first embodiment (FIG. 10 and FIG. 11), instead of the behavior log DB 46-1, the behavior log DB 46a is read. By simply replacing a portion "DESTINATION OF TRANSMITTED E-MAIL OF" in the item with "PROPER NOUN USED BY", the similar process is applied. In the flowchart in the second embodiment (FIG. 14 and FIG. 15), instead of the behavior log DB 46-2, the behavior DB 46a is read. By simply replacing a portion "WEB BROWSING DESTINATIONS OF" in the item with "PROPER NOUN USED BY", the similar process is applied. Accordingly, detailed explanations thereof will be omitted.

Next, the third embodiment will be described. In the third embodiment, the behavior log 7 may include information of a user name and a behavior item for the user to use the terminal 3. The behavior item may indicates transmitted and received e-mails/day, a patch application interval (days), and the like. At each of the terminals 3, log data of date and time when the e-mail is transmitted or received, date and time when a patch is applied, and the like are recorded. The behavior log extraction part 31 creates the behavior logs 7 from the log data and sends the behavior logs 7 to the alert transmission apparatus 100 at intervals of predetermined days.

First, the behavior characteristics in the third embodiment will be described. FIG. 17 is a diagram illustrating a data example of the behavior log DB in the third embodiment. In FIG. 17, the behavior log DB 46-3 stores logs of actions using the terminal 3 for each of the users, and includes items of "TRANSMITTED AND RECEIVED E-MAILS/DAY", "PATCH APPLICATION INTERVAL (DAYS)", and the like.

The item "TRANSMITTED AND RECEIVED E-MAILS/DAY" indicates an average value of the transmitted and received e-mails per day at the terminal 3 during a latest predetermined term. The item "PATCH APPLICATION INTERVAL (DAYS)" indicates an average value of the patch application interval at the terminal 3 during the latest predetermined term.

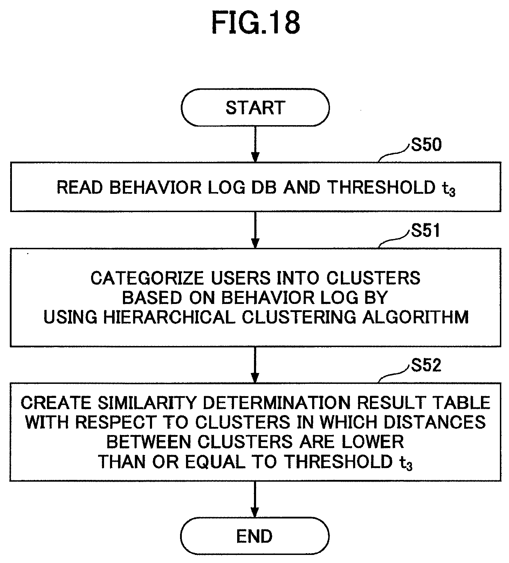

The alert transmission apparatus 100 may refer to the behavior log DB 46-3, may use latest behavior logs 7 for each of the users, and may group the users by a hierarchical clustering algorithm. Another behavior log analysis process (FIG. 18) is conducted by the behavior log analysis part 42 using an n-dimensional vector indicating values of the items of the behavior log 7. In this case, n corresponds to a total number of items.

The alert transmission apparatus 100 may acquire an average value for each of item values, a standard deviation, and the like for each of the users by using the behavior logs 7 being accumulated, and create the n-dimensional vector indicating respective acquired values.

FIG. 18 is a flowchart for explaining the behavior log analysis process in the third embodiment. In FIG. 18, the behavior log analysis part 42 reads the behavior log DB 46-3 and the threshold $t_3$ (step S50).

The behavior log analysis part 42 classifies the users into clusters based on the behavior logs 7 by using the hierarchical clustering algorithm (step S51).

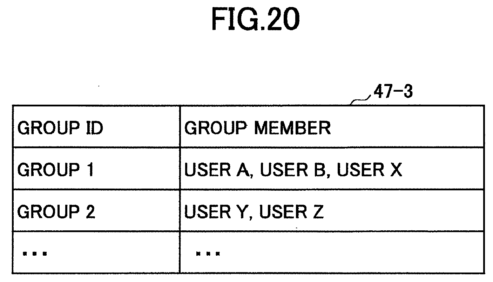

Then, the behavior log analysis part 42 creates a similarity determination result table 47-3 (FIG. 20) in which the clusters having a distance shorter than or equal to the threshold $t_3$ among the clusters are classified into one group (the same group) (step S52). The similarity determination result table 47-3 is stored in the auxiliary storage device 13a. After that, the behavior log analysis part 42 terminates this behavior log analysis process.

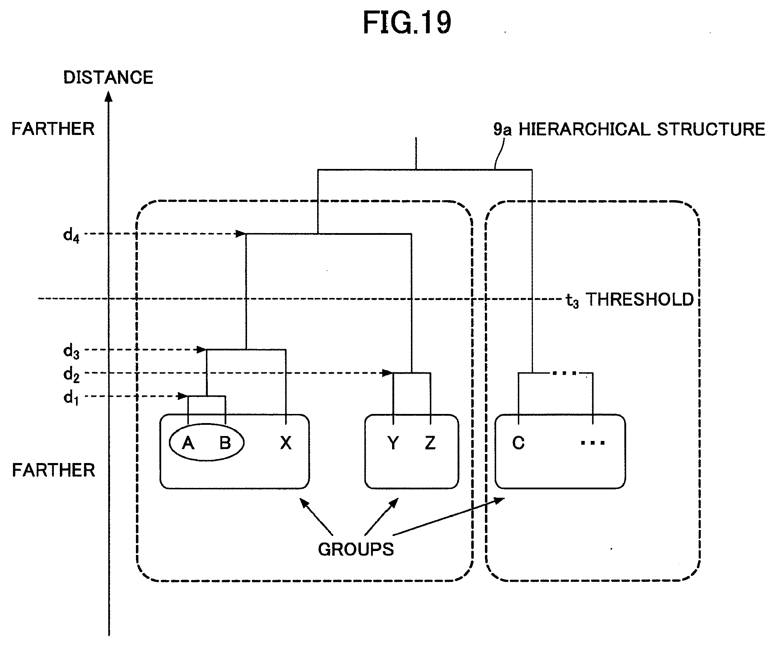

FIG. 19 is a diagram illustrating a result example of a hierarchical clustering. In FIG. 19, a vertical axis indicates a distance between the users, and the result example of the hierarchical clustering using the behavior log DB 46-3 is illustrated. In a hierarchical structure 9a in FIG. 19, at the threshold $t_3$, first, the user A is classified into the same cluster with the user B who is the closest to the user A within a distance $d_1$. The user X is further included within a next closer distance $d_3$, so that the users A, B, and X are classified into one cluster.

On the other hand, the user Y is classified into the same cluster with the user Z within a distance $d_2$ closest to the user Y. A distance between the cluster where the users A, B, and X are included and the cluster where the users Y and Z are included is a distance $d_4$ which is longer than the threshold $t_3$. Hence, these two clusters are not grouped into one cluster. Similarly, the user C forms a cluster with other users.

Grouping is performed by regarding the cluster formed within a distance of the threshold $t_3$ as the group. That is, each of the cluster where the users A, B, and X are included, the cluster where the users Y and Z are included, the cluster where at least the user C is included, and the like is regarded as one group.

Based on the description above, the similarity determination result table 47-3 is created as depicted in FIG. 20. FIG. 20 is a diagram illustrating a data example of the similarity determination result table in the third embodiment.

In FIG. 20, the similarity determination result table 47-3 includes items of "GROUP ID", "GROUP MEMBER", and the like, and indicates the names of the users classified into the same group. The item "GROUP ID" indicates information for uniquely specifying the group. The item "GROUP MEMBER" indicates the names of the users classified into the same group.

This example illustrates at least that the user A, the user B, and the user X are classified into a GROUP 1, and the user Y and the user Z are classified into a GROUP 2.

The alert distribution part 44 acquires the names of other users in the group including the user name received from the damage receiving part 43, and transmits the alert 8b to the other users.

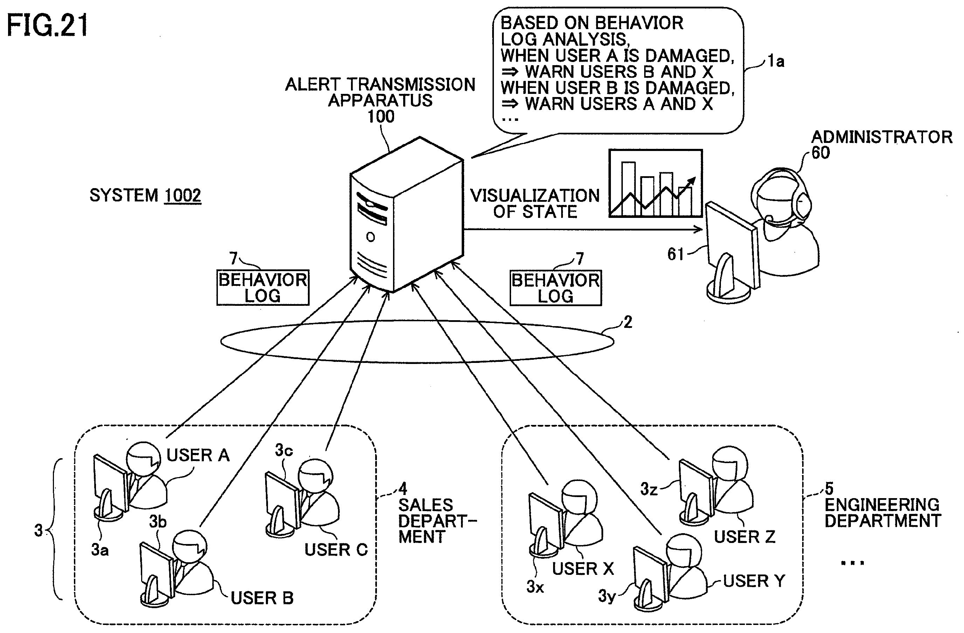

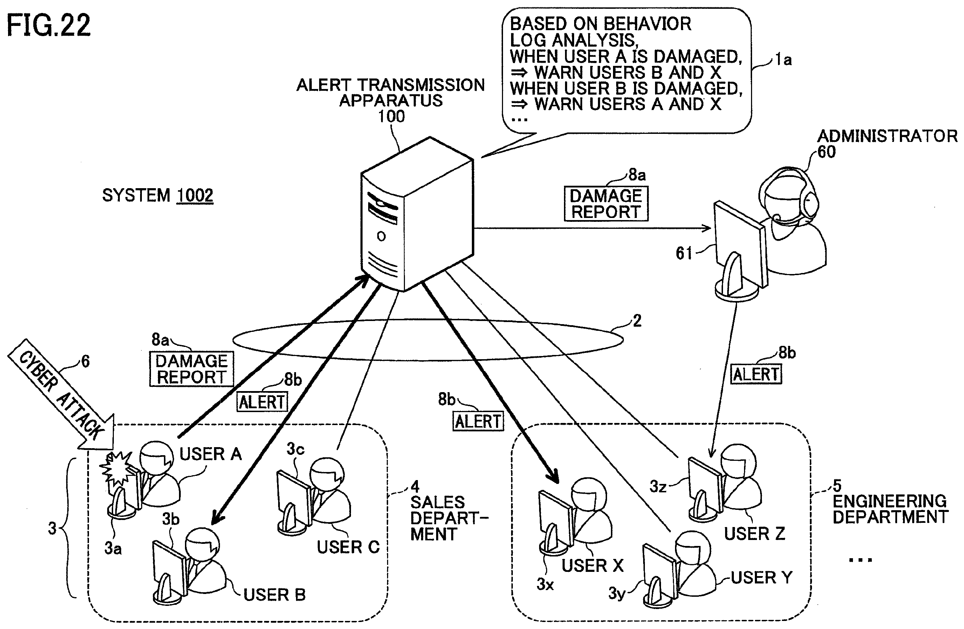

Next, in the embodiment, a case, in which a state based on the behavior logs 7 for each of the users is visualized and presented to the administrator and the like, will be described as a fourth embodiment with reference to FIG. 21 and FIG. 22.

FIG. 21 is a diagram illustrating an example of the normal operation in the fourth embodiment. In a system 1002 depicted in FIG. 21, the alert transmission apparatus 100 displays a behavior log analysis result by the behavior log analysis part 42, at an administrator terminal 61 of an administrator 60. As the behavior log analysis result, the similarity determination result table 47 may be displayed at least.

FIG. 22 is a diagram illustrating an operation example in a case of receiving the cyber attack in the fourth embodiment. In the system 1002 illustrated in FIG. 22, when receiving the damage report 8a, the alert transmission apparatus 100 always transmits the damage report 8a to the administrator 60. After checking the damage report 8a at the administrator terminal 61, the administrator 60 may send the alert 8b to the users who are determined to be warned.

Alternatively, the alert transmission apparatus 100 may open a fact in that the damage report 8a has been noticed, for all users to see a notice of the damage report 8a.

Furthermore, when receiving the damage report 8a, the alert transmission apparatus 100 may always warn users who are easily damaged by the cyber attack. In order to predict the users who are easily damaged by the cyber attack, the behavior logs 7 pertinent to specific behavior characteristics likely to be easily damaged may be collected and analyzed.

Such as the items maintained by the behavior log DB 46-3 as illustrated in FIG. 17, the transmitted and received e-mails/day, the patch application interval (days), and the like may be determined in advance, and may be collected as the behavior log 7 from each of the terminals 3.

With respect to the items of the transmitted and received e-mails/day, the patch application interval (days), and the like, when a number of the items of which values are higher than or equal to respective certain values is greater, it is determined that the users are likely to be damaged by the cyber attack.

As described above, in the embodiment, the users are grouped based on the behavior logs 7 collected from the terminals 3, and other users are warned by the alert 8b within the group of a reporting user. With respect to the cyber attack, it is possible to appropriately warn proper users.

According to the embodiment, it is possible to properly determine the users to inform of the cyber attack, and to transmit the alert 8b to the determined users.

**Claims**

1. An alert transmission program that cases a computer (100) to execute a process comprising:

   collecting behavior logs (7) of multiple users (3) from multiple terminals;
   grouping users (3) having a high similarity to each other based on the behavior logs (7); and
   transmitting an alert (8b) to other users (3) belonging to a group of a user (3) indicated by a report (8a) of a cyber attack, when receiving the report (8a) from a terminal of the user (3).

2. The alert transmission program as claimed in claim 1, wherein
   the behavior logs (7) indicate destinations of e-mails, and
   the computer (100) groups the multiple users (3) based on the destinations of the e-mails.

3. The alert transmission program as claimed in claim 1, wherein
   the behavior logs (7) indicate browsing destinations of Web sites, and
   the computer (100) groups the multiple users (3) based on similarities among the browsing destinations of the Web sites.

4. The alert transmission program as claimed in claim 1, wherein
   the behavior logs (7) indicate behavior characteristics pertinent to operations of the terminals of the users (3), and
the computer (100) groups the multiple users (3) based on a similarity of the behavior characteristics.

5. The alert transmission program as claimed in claim 1, wherein the process further comprises:

displaying an analysis result concerning the behavior logs (7) at a terminal of an administrator.

6. The alert transmission program as claimed in claim 5, wherein the process further comprises:

informing the administrator of the report (8a) of the cyber attack when receiving the report (8a) from the terminal.

7. The alert transmission program as claimed in claim 6, wherein the computer (100) transmits the alert (8b) to the users (3) based on a determination by the administrator who checks the report (8a) of the cyber attack.

8. The alert transmission program as claimed in claim 6, wherein the report (8a) of the cyber attack is displayed at the terminals of the other users (3).

9. An alert transmission method comprising:

collecting behavior logs (7) of multiple users (3) from multiple terminals;
grouping, by a computer (100), users (3) having a high similarity to each other based on the behavior logs (7); and
transmitting an alert (8b) to other users (3) belonging to a group of a user (3) indicated by a report (8a) of a cyber attack, when receiving the report (8a) from a terminal of the user (3).

10. An alert transmission apparatus comprising:

collecting unit configured to collect behavior logs (7) of multiple users (3) from multiple terminals;

analyzing unit configured to analyze the behavior logs (7) and grouping users (3) having a high similarity to each other based on an analysis result;
receiving unit configured to receive a report (8a) of a cyber attack from a terminal; and
distributing unit configured to distribute an alert (8b) to terminals of other users (3) belonging to a group of a user (3) indicated by the report (8a).

# FIG.1

ALERT TRANSMISSION
APPARATUS
100

BASED ON BEHAVIOR
LOG ANALYSIS,
WHEN USER A IS DAMAGED,
⇒ WARN USERS B AND X
WHEN USER B IS DAMAGED,
⇒ WARN USERS A AND X
... — 1a

1000 SYSTEM

7 — BEHAVIOR LOG

7 — BEHAVIOR LOG

2

3a 3b USER A
USER B
3c USER C

4 SALES DEPART-MENT

3x USER X
3y USER Y
3z USER Z

5 ENGINEERING DEPARTMENT

...

# FIG.2

ALERT TRANSMISSION APPARATUS 100

1a — BASED ON BEHAVIOR LOG ANALYSIS, WHEN USER A IS DAMAGED, ⇒ WARN USERS B AND X WHEN USER B IS DAMAGED, ⇒ WARN USERS A AND X ...

1000 SYSTEM

6 CYBER ATTACK

8a DAMAGE REPORT

8b ALERT

8b ALERT

3a USER A

3b USER B

3c USER C

4 SALES DEPARTMENT

3x USER X

3y USER Y

3z USER Z

5 ENGINEERING DEPARTMENT

...

2

3

EP 3 038 005 A1

# FIG.3

ALERT TRANSMISSION APPARATUS 100

- CPU 11a
- MAIN STORAGE DEVICE 12a
- AUXILIARY STORAGE DEVICE 13a
- INPUT DEVICE 14a
- BUS B1
- DISPLAY DEVICE 15a
- COMMUNI-CATION I/F 17a
- DRIVE DEVICE 18a
- RECORDING MEDIUM 19a

EP 3 038 005 A1

# FIG.4

EP 3 038 005 A1

# FIG.5

BEHAVIOR LOG 7

BEHAVIOR LOG COLLECTION PART 41

BEHAVIOR LOG DB 46

BEHAVIOR LOG ANALYSIS PART 42

DAMAGE REPORT 8a

DAMAGE RECEIVING PART 43

SIMILARITY DETERMINATION RESULT TABLE 47

ALERT 8b

ALERT DISTRIBUTION PART 44

EP 3 038 005 A1

# FIG.6

3 TERMINAL

31 BEHAVIOR LOG EXTRACTION PART

37 BEHAVIOR LOG STORAGE PART

7 BEHAVIOR LOG

32 DAMAGE REPORT PART

8a DAMAGE REPORT

33 ALERT RECEIVING PART

8b ALERT

EP 3 038 005 A1

# FIG.7

EP 3 038 005 A1

## 3a TERMINAL

**16b** USER I/F → **31** BEHAVIOR LOG EXTRACTION PART → **37** BEHAVIOR LOG STORAGE PART

**7** BEHAVIOR LOG

## 3b TERMINAL

**16b** USER I/F → **31** BEHAVIOR LOG EXTRACTION PART → **37** BEHAVIOR LOG STORAGE PART

**7** BEHAVIOR LOG

3

ALERT TRANSMISSION APPARATUS

**100**

**41** BEHAVIOR LOG COLLECTION PART → **47** SIMILARITY DETERMINATION RESULT TABLE

**1000** SYSTEM

# FIG.8

EP 3 038 005 A1

# FIG.9

```
                                                    46-1
┌──────────────────────────────────┐
│   DESTINATION OF TRANSMITTED      │
│        E-MAIL OF USER A           │
├──────────────────────────────┬────┤
│ neko@jp.housewife.co.jp      │TED │
├──────────────────────────────┼────┤
│ sasaki@pmail.com             │    │
├──────────────────────────────┤    │
│ ...                          │    │
│          ┌───────────────────┴────┤
│          │ ...                    │
└──────────┴────────────────────────┘
```

# FIG.10

```
          START
            │
            ▼                                    S10
┌─────────────────────────────────────────────┐
│     READ BEHAVIOR LOG DB AND THRESHOLD t₁    │
└─────────────────────────────────────────────┘
            │                                    S11
            ▼
╱─────────────────────────────────────────────╲
│              FOR ALL USERS                    │
╲─────────────────────────────────────────────╱
            │                                    S12
            ▼
┌─────────────────────────────────────────────┐
│     ACQUIRES USER NAME, AND SET TO USER A    │
└─────────────────────────────────────────────┘
            │                                    S13
            ▼
╱─────────────────────────────────────────────╲
│        FOR ALL USERS EXCLUDING USER A        │
╲─────────────────────────────────────────────╱
            │                                    S14
            ▼
┌─────────────────────────────────────────────┐
│     ACQUIRE USER NAME OTHER THAN USER A,     │
│            AND SET TO USER B                  │
└─────────────────────────────────────────────┘
            │                                    S15
            ▼
┌─────────────────────────────────────────────┐
│   ACQUIRE TOTAL NUMBER nₐ OF DESTINATIONS    │
│      OF E-MAILS TRANSMITTED FROM USER A      │
└─────────────────────────────────────────────┘
            │                                    S16
            ▼
┌─────────────────────────────────────────────┐
│   ACQUIRE TOTAL NUMBER n_B OF DESTINATIONS   │
│      OF E-MAILS TRANSMITTED FROM USER B      │
└─────────────────────────────────────────────┘
            │                                    S17
            ▼
┌─────────────────────────────────────────────┐
│  ACQUIRE TOTAL NUMBER n_AB OF DESTINATIONS OF│
│ TRANSMITTED E-MAILS IN COMMON TO USER A AND  │
│                  USER B                       │
└─────────────────────────────────────────────┘
            │                                    S18
            ▼
┌─────────────────────────────────────────────┐
│        ACQUIRE DETERMINATION INDEX i          │
└─────────────────────────────────────────────┘
```

$$\text{ACQUIRE DETERMINATION INDEX } i$$
$$\text{DETERMINATION INDEX } i = n_{AB}/(n_A + n_B - n_{AB})$$

```
            │                                    S19
            ▼
╱─────────────────────────────────────────────╲         NO
╲              i > t₁ ?                          ╱──────────┐
 ╲─────────────────────────────────────────────╱          │
          YES │                          S20               │
              ▼                                            │
┌─────────────────────────────────────────────┐           │
│  ADD USER B TO "PERSON TO BE WARNED" OF RECORD│          │
│ IN WHICH "DAMAGED PERSON" INDICATES USER A   │           │
└─────────────────────────────────────────────┘           │
              │◄───────────────────────────────────────────┘
              │                                  S21
              ▼
╱─────────────────────────────────────────────╲
╲─────────────────────────────────────────────╱
              │                                  S22
              ▼
╱─────────────────────────────────────────────╲
╲─────────────────────────────────────────────╱
              │
              ▼
          END
```

# FIG.11

```
        ( START )
           │            S30
┌──────────▼──────────────────────┐
│  READ BEHAVIOR LOG DB AND THRESHOLD t₂  │
└──────────┬──────────────────────┘
           │            S31
╱──────────▼──────────────────────╲
│          FOR ALL USERS           │
╲──────────┬──────────────────────╱
           │            S32
┌──────────▼──────────────────────┐
│  ACQUIRES USER NAME, AND SET TO USER A  │
└──────────┬──────────────────────┘
           │            S33
╱──────────▼──────────────────────╲
│   FOR ALL USERS EXCLUDING USER A  │
╲──────────┬──────────────────────╱
           │            S34
┌──────────▼──────────────────────┐
│   ACQUIRE USER NAME OTHER THAN USER A,  │
│         AND SET TO USER B         │
└──────────┬──────────────────────┘
           │            S35
┌──────────▼──────────────────────┐
│  ACQUIRE TOTAL NUMBER nAB OF DESTINATIONS OF  │
│ TRANSMITTED E-MAILS IN COMMON TO USER A AND USER B │
└──────────┬──────────────────────┘
           │            S36
          ╱◇╲                     NO
      nAB > t₂ ?  ──────────────────┐
          ╲◇╱                       │
           │ YES      S37           │
┌──────────▼──────────────────────┐ │
│ ADD USER B TO "PERSON TO BE WARNED" OF RECORD │ │
│  IN WHICH "DAMAGED PERSON" INDICATES USER A │ │
└──────────┬──────────────────────┘ │
           │◄───────────────────────┘
           │            S38
╱──────────▼──────────────────────╲
│                                  │
╲──────────┬──────────────────────╱
           │            S39
╱──────────▼──────────────────────╲
│                                  │
╲──────────┬──────────────────────╱
           │
        ( END )
```

S30 — READ BEHAVIOR LOG DB AND THRESHOLD $t_2$

S31 — FOR ALL USERS

S32 — ACQUIRES USER NAME, AND SET TO USER A

S33 — FOR ALL USERS EXCLUDING USER A

S34 — ACQUIRE USER NAME OTHER THAN USER A, AND SET TO USER B

S35 — ACQUIRE TOTAL NUMBER $n_{AB}$ OF DESTINATIONS OF TRANSMITTED E-MAILS IN COMMON TO USER A AND USER B

S36 — $n_{AB} > t_2$ ?

S37 — ADD USER B TO "PERSON TO BE WARNED" OF RECORD IN WHICH "DAMAGED PERSON" INDICATES USER A

# FIG.12

47-1

| DAMAGED PERSON | PERSON TO BE WARNED |
|---|---|
| USER A | USER B, USER X |
| USER B | USER A, USER X |
| . . . | . . . |

# FIG.13

46-2

| WEB BROWSING DESTINATION OF USER A |
|---|
| http://www.neko/housewife/index.html |
| http://www.sample/test/index.html |
| . . . |

. . .

# FIG.14

```
                    ( START )
                        │
                        ▼                          S10
┌─────────────────────────────────────────────────┐
│   READ BEHAVIOR LOG DB AND THRESHOLD t₁          │
└─────────────────────────────────────────────────┘
                        │                          S11
        ┌───────────────────────────────────────────┐
        /            FOR ALL USERS                    \
                        │                          S12
┌─────────────────────────────────────────────────┐
│   ACQUIRES USER NAME, AND SET TO USER A          │
└─────────────────────────────────────────────────┘
                        │                          S13
        ┌───────────────────────────────────────────┐
        /       FOR ALL USERS EXCLUDING USER A        \
                        │                          S14
┌─────────────────────────────────────────────────┐
│   ACQUIRE USER NAME OTHER THAN USER A,           │
│   AND SET TO USER B                              │
└─────────────────────────────────────────────────┘
                        │                          S15-2
┌─────────────────────────────────────────────────┐
│   ACQUIRE TOTAL NUMBER nₐ OF                     │
│   WEB BROWSING DESTINATIONS OF USER A            │
└─────────────────────────────────────────────────┘
                        │                          S16-2
┌─────────────────────────────────────────────────┐
│   ACQUIRE TOTAL NUMBER n_B OF                    │
│   WEB BROWSING DESTINATIONS OF USER B            │
└─────────────────────────────────────────────────┘
                        │                          S17-2
┌─────────────────────────────────────────────────┐
│   ACQUIRE TOTAL NUMBER n_AB OF WEB BROWSING      │
│   DESTINATIONS IN COMMON FOR USER A AND USER B   │
└─────────────────────────────────────────────────┘
                        │                          S18-2
┌─────────────────────────────────────────────────┐
│   ACQUIRE DETERMINATION INDEX i                  │
│   DETERMINATION INDEX i = n_AB/(nₐ+n_B−n_AB)     │
└─────────────────────────────────────────────────┘
                        │                          S19
                  ◇───────────◇                        NO
                 <   i > t₁ ?   >──────────────┐
                  ◇───────────◇                │
                    YES │          S20         │
┌─────────────────────────────────────────┐    │
│  ADD USER B TO "PERSON TO BE WARNED" OF  │    │
│  RECORD IN WHICH "DAMAGED PERSON"        │    │
│  INDICATES USER A                        │    │
└─────────────────────────────────────────┘    │
                        │◄──────────────────────┘
                        │                          S21
        ┌───────────────────────────────────────────┐
        \                                            /
                        │                          S22
        ┌───────────────────────────────────────────┐
        \                                            /
                        │
                    ( END )
```

Determination index equation: $i = n_{AB}/(n_A + n_B - n_{AB})$

Decision: $i > t_1$ ?

# FIG.15

START

S30
READ BEHAVIOR LOG DB AND THRESHOLD $t_2$

S31
FOR ALL USERS

S32
ACQUIRES USER NAME, AND SET TO USER A

S33
FOR ALL USERS EXCLUDING USER A

S34
ACQUIRE USER NAME OTHER THAN USER A,
AND SET TO USER B

S35-2
ACQUIRE TOTAL NUMBER $n_{AB}$ OF WEB BROWSING
DESTINATIONS IN COMMON FOR USER A AND USER B

S36
$n_{AB} > t_2$ ?            NO

YES

S37
ADD USER B TO "PERSON TO BE WARNED" OF RECORD
IN WHICH "DAMAGED PERSON" INDICATES USER A

S38

S39

END

# FIG.16

| PROPER NOUN USED BY USER A |
|---|
| ABC CORPORATION |
| XYZ PRODUCT |
| ... |

46a

XYZ PRODUCT

...

# FIG.17

| BEHAVIOR CHARACTERISTICS OF USER A | | |
|---|---|---|
| TRANSMITTED AND RECEIVED E-MAILS/DAY | PATCH APPLICATION INTERVAL (DAYS) | ... |
| 12 | 1 | ... |
| 3 | 3 | ... |
| ... | ... | ... |

46-3

| ... | ... | ... |
|---|---|---|
| ... | ... | ... |

# FIG.18

START

S50

READ BEHAVIOR LOG DB AND THRESHOLD $t_3$

S51

CATEGORIZE USERS INTO CLUSTERS
BASED ON BEHAVIOR LOG BY
USING HIERARCHICAL CLUSTERING ALGORITHM

S52

CREATE SIMILARITY DETERMINATION RESULT TABLE
WITH RESPECT TO CLUSTERS IN WHICH DISTANCES
BETWEEN CLUSTERS ARE LOWER
THAN OR EQUAL TO THRESHOLD $t_3$

END

# FIG.19

DISTANCE

FARTHER

9a HIERARCHICAL STRUCTURE

$d_4$

$t_3$ THRESHOLD

$d_3$

$d_2$

$d_1$

A  B        X

Y  Z

C    · · ·

· · ·

FARTHER

GROUPS

EP 3 038 005 A1

# FIG.20

47-3

| GROUP ID | GROUP MEMBER |
|----------|--------------|
| GROUP 1 | USER A, USER B, USER X |
| GROUP 2 | USER Y, USER Z |
| ... | ... |

# FIG.21

SYSTEM 1002

ALERT TRANSMISSION APPARATUS 100

BASED ON BEHAVIOR LOG ANALYSIS, WHEN USER A IS DAMAGED, ⇒ WARN USERS B AND X WHEN USER B IS DAMAGED, ⇒ WARN USERS A AND X ... 1a

ADMINISTRATOR 60

VISUALIZATION OF STATE

61

7 BEHAVIOR LOG

7 BEHAVIOR LOG

2

USER A 3c

3a 3b

USER B

USER C

4 SALES DEPARTMENT

3

3z

USER Z

USER X

3x 3y USER Y

5 ENGINEERING DEPARTMENT

...

EP 3 038 005 A1

# FIG.22

ALERT TRANSMISSION APPARATUS
100

BASED ON BEHAVIOR LOG ANALYSIS,
WHEN USER A IS DAMAGED,
⇒ WARN USERS B AND X
WHEN USER B IS DAMAGED,
⇒ WARN USERS A AND X
...
1a

ADMINISTRATOR
60

SYSTEM 1002

8a
DAMAGE REPORT

61

2

8a
DAMAGE REPORT

8b
ALERT

8b
ALERT

8b
ALERT

CYBER ATTACK
6

USER A
3a
3b

USER B
USER C
3c

4 SALES DEPART-MENT

USER X
3x

USER Y
3y

3z

USER Z

5 ENGINEERING DEPARTMENT
...

3

EP 3 038 005 A1

Europäisches
Patentamt

European
Patent Office

Office européen
des brevets

# EUROPEAN SEARCH REPORT

Application Number

EP 15 20 1574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/205419 A1 (LIANG YUNG CHANG [US] ET AL) 14 October 2004 (2004-10-14)<br>* paragraph [0002] *<br>* paragraph [0014] *<br>* paragraph [0015] *<br>* paragraph [0031] *<br>* table 1 *<br>* paragraph [0028] *<br>----- | 1-10 | INV.<br>G06F21/55<br>H04L29/06<br>H04L29/08 |
| Y | US 2010/161831 A1 (HAAS DAVID [IL] ET AL) 24 June 2010 (2010-06-24)<br>* paragraph [0052] *<br>* paragraph [0042] *<br>----- | 1-10 | |
| A | US 7 028 338 B1 (NORRIS JAMES W [US] ET AL) 11 April 2006 (2006-04-11)<br>* column 1, line 37 - line 41 *<br>----- | 5-8 | |

| | TECHNICAL FIELDS SEARCHED (IPC) |
|---|---|
| | G06F<br>H04L |

The present search report has been drawn up for all claims

| Place of search | Date of completion of the search | Examiner |
|---|---|---|
| Munich | 23 March 2016 | Medvesan, Oana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 20 1574

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2016

| Patent document cited in search report | | Publication date | Patent family member(s) | Publication date |
|---|---|---|---|---|
| US 2004205419 | A1 | 14-10-2004 | NONE | |
| US 2010161831 | A1 | 24-06-2010 | NONE | |
| US 7028338 | B1 | 11-04-2006 | NONE | |

EPO FORM P0459

For more details about this annex : see Official Journal of the European Patent Office, No. 12/82

**EP 3 038 005 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9269930 A
- JP 5385253 B